# EUROPÄISCHE PATENTSCHRIFT

(11) **EP 3 656 163 B1**
(45) Veröffentlichungstag und Bekanntmachung des Hinweises auf die Patenterteilung: **01.05.2024**
(21) Anmeldenummer: 18731780.5
(22) Anmeldetag: 11.06.2018
(51) Int. Cl.: H04W 72/0446, H04W 84/18, H04W 76/14, H04W 16/14, H04W 4/44, H04W 4/46

(54) **VERFAHREN ZUM BETREIBEN EINER NETZWERKINFRASTRUKTURSEITIGEN NETZWERKEINHEIT, NETZWERKINFRASTRUKTURSEITIGE NETZWERKEINHEIT, VERFAHREN ZUM BETREIBEN EINER STRASSENSEITIGEN NETZWERKEINHEIT, STRASSENSEITIGE NETZWERKEINHEIT**
METHOD FOR OPERATING A NETWORK-INFRASTRUCTURE NETWORK UNIT, NETWORK-INFRASTRUCTURE NETWORK UNIT, METHOD FOR OPERATING A ROADSIDE NETWORK UNIT, AND ROADSIDE NETWORK UNIT
PROCÉDÉ DE FONCTIONNEMENT D'UNE UNITÉ DE RÉSEAU CÔTÉ INFRASTRUCTURE DE RÉSEAU, UNITÉ DE RÉSEAU CÔTÉ INFRASTRUCTURE DE RÉSEAU, PROCÉDÉ DE FONCTIONNEMENT D'UNE UNITÉ DE RÉSEAU CÔTÉ ROUTE, UNITÉ DE RÉSEAU CÔTÉ ROUTE

(30) Priorität: 18.07.2017 DE 102017212245; 13.10.2017 DE 102017218321
(43) Veröffentlichungstag der Anmeldung: 27.05.2020
(73) Patentinhaber: Robert Bosch GmbH, 70442 Stuttgart (DE)
(72) Erfinder: HOFMANN, Frank, 31139 Hildesheim (DE); BRAHMI, Nadia, 31139 Hildesheim (DE)
(86) Internationale Anmeldenummer: PCT/EP2018/065298
(87) Internationale Veröffentlichungsnummer: WO 2019/015873

(56) Entgegenhaltungen:
- US-A1- 2017 188 391
- ZTE: "Co-channel coexistence between DSRC and LTE V2V on same channel", 3GPP DRAFT; R1-1609807 - CO-CHANNEL COEXISTENCE BETWEEN DSRC AND LTE V2V, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , Bd. RAN WG1, Nr. Lisbon, Portugal; 20161010 - 20161014 30. September 2016 (2016-09-30), XP051158593, Gefunden im Internet: URL:http://www.3gpp.org/ftp/tsg_ran/WG1_RL 1/TSGR1_86b/Docs/ [gefunden am 2016-09-30]
- SAMSUNG: "Revisiting of long term co-channel coexistence solution between IEEE802.11p/DSRC and LTE-V2X", 3GPP DRAFT; R2-168094, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , Bd. RAN WG2, Nr. Reno, USA; 20161114 - 20161118 4. November 2016 (2016-11-04), XP051192373, Gefunden im Internet: URL:http://www.3gpp.org/ftp/tsg_ran/WG2_RL 2/TSGR2_96/Docs/ [gefunden am 2016-11-04]

## Beschreibung

### Stand der Technik

Die Erfindung betrifft ein Verfahren zum Betreiben einer netzwerkinfrastrukturseitigen Netzwerkeinheit, eine netzwerkinfrastrukturseitige Netzwerkeinheit, ein Verfahren zum Betreiben einer straßenseitigen Netzwerkeinheit und eine straßenseitige Netzwerkeinheit.

Es ist bekannt, dass bereits heute Fahrzeuge in der Lage sind, Informationen mit anderen Fahrzeugen in deren Nähe (V2V: Vehicle to Vehicle) auszutauschen. Auch können Fahrzeuge mit straßenseitiger Infrastruktur drahtlos kommunizieren (V2I: Vehicle to Infrastructure). Ebenso kann das Fahrzeug mit einem Backend-Server im Internet (V2N: Vehicle to Network) oder mit einem Fußgänger-Endgerät (V2P: Vehicle to Person) drahtlos kommunizieren. Diese Kommunikation wird insgesamt auch als Vehicle-to-Everything (V2X) bezeichnet. Die Entwicklung neuer Funktionen und Dienstleistungen in der Automobilindustrie wie beispielsweise automatisiertes Fahren profitiert von V2X. Verkehrssicherheit, Fahrkomfort und Energieeffizienz können verbessert werden. Dies führt zu neuen Produkten und Geschäftsmodellen für Autohersteller, Automobilzulieferer und andere Dienstleister.

Die erste Generation der V2X-Anwendungen, die in den kommenden Jahren eingesetzt werden soll, ist hauptsächlich auf die Anwendung auf der Straße bezogen. Ihr Ziel ist es, dem Fahrer Informationen über das Straßenumfeld bereitszustellen. Fahrzeuge stellen periodisch Statusinformationen (z. B. Position, Geschwindigkeit, Beschleunigung usw.) und/oder Ereignisinformation (Rettungseinsatz, liegen gebliebenes Fahrzeug, Stau) bereit. Diese Informationen werden in der Regel in Form von Kurzmitteilungen lokal abgesetzt. Von benachbarten Fahrzeugen kann diese ereignisbasierte Information an eine zentrale Netzwerkeinheit (Basisstation, Backend) geschickt werden.

Für V2X Direct Device-to-Device (D2D) Kommunikation gibt es derzeit zwei konkurrierende Technologien. Die erste Technologie basiert funktechnisch auf dem IEEE802.11p Standard, welcher die Basis für die übergreifenden Standards DSRC (Dedicated Short Range Communication) in den USA und ETSI ITS G5 (ETSI: European Telecommunications Standards Institute; ITS: Intelligent Transport Systems) in Europa bildet. Die zweite Technologie basiert auf 3GPP (3rd Generation Partnership Project) LTE (Long Term Evolution) und ist auch unter dem Kürzel LTE-V2X bekannt. Eine Weiterentwicklung der LTE-V2X-Technologie wird mit 5G (5th generation mobile networks) erwartet.

Der IEEE 802.1 1p-Standard verwendet die PHY-Schicht des IEEE 802.11a-Standards auf der Grundlage von Orthogonal Frequency Division Multiplexing (OFDM) mit einigen Modifikationen. Die MAC-Schicht basiert auf dem Enhanced Distributed Channel Access (EDCA), welcher konkurrenzbasiert ist. Des Weiteren wird Carrier Sense Multiple Access (CSMA) mit Collision Avoidance (CSMA / CA) verwendet. CSMA / CA folgt dem Listen-Before-Talk-Prinzip, um Kollisionen auf dem Kanal zu minimieren. Wenn eine Netzwerkeinheit (in diesem Zusammenhang ein Fahrzeug) Daten zu übermitteln hat, führt diese eine Kanalmessung durch, um zu überprüfen, ob der Kanal besetzt ist. Wenn der Kanal als leer wahrgenommen wird, wartet die Netzwerkeinheit mit der geplanten Übertragung eine zufallsermittelte Zeit ab und beginnt dann mit der Übertragung. Wenn der Kanal während der Kanalmessung belegt ist, so wird die Netzwerkeinheit eine Backoff-Prozedur durchführen, d. h. sie wartet mit dem nächsten Kanalzugriff eine zufallsermittelte Zeitperiode ab. Je höher die Anzahl der Netzwerkeinheiten ist, die in einem geografischen Gebiet zu senden versuchen, desto höher ist die Wahrscheinlichkeit, dass eine Netzwerkeinheit ihre Übertragung verzögert, was zu insgesamt erhöhten Verzögerungen im Netzwerk führt. Der IEEE 802.11p-Standard bietet gegenüber anderen WLAN-Standards auf Basis von IEEE 802.11 Vorteile in Bezug auf Latenz und Signalisierungsaufwand und ist auf den Anwendungsfall V2V angepasst.

Die LTE-Erweiterung für V2X ab dem 3GPP Release 14 schlägt vor, ein lizenziertes und/oder ein nicht lizenziertes Spektrum für die Kommunikation zu nutzen. Die V2V-Kommunikation basiert auf einer direkten Device-to-Device-Schnittstelle (auch als Sidelink-Schnittstelle an der physikalischen Schicht bezeichnet). Im Gegensatz zu 802.1 1p geschieht die Übertragung zellgestützt, d. h. durch das Netzwerk geplant durchführt. Übertragungsrechte werden von einer Scheduler-Einheit, die sich in der Basisstation befindet, erteilt, sodass Kollisionen vermieden und Störungen minimiert werden. Die Kontrolle durch die Basisstation kann nur in Bereichen durchgeführt werden, in denen das Basisstationsignal verfügbar ist (in-coverage). In einem Fall, in dem kein Basisstationssignal zur Verfügung steht (out-of-coverage), findet die Kommunikation mit vordefinierten Parametern über den Sidlink statt.

Die 5G Automotive Association (5GAA) möchte das 5,9 GHz ITS-Frequenzspektrum, auf dem auch die ITS-G5-Systeme arbeiten, verwenden. Dies stellt eine Bedrohung für die Zukunft der ITS-G5-Systeme und deren Einsatz dar, da einige Automobilhersteller ihre Pläne bereits angekündigt haben, ITS-G5-basierte Systeme in ihrem Autos zu verbauen. Damit würden zwei unterschiedliche Drahtloskommunikationssysteme im gleichen nicht lizenzierten Frequenzbereich senden und es ergäben sich Leistungsverschlechterungen für beide Technologien.

In US 2017/188391 A1 wird ein Erfassungsverfahren für ein erstes Fahrzeug-Benutzergerät (UE) zur Kollisionsvermeidung in einem drahtlosen Kommunikationsnetz offenbart. Das Verfahren umfasst das Empfangen eines Satzes von Scheduling Assignment (SA)-Informationen, die einem Satz von zweiten Fahrzeug-UEs zugewiesen sind, das Dekodieren des Satzes von SA-Informationen, von denen jede SA-Informationen für jeden des Satzes von zweiten Fahrzeug-UEs enthält, das Durchführen einer Energieerfassungsoperation für Ressourcen, die von jedem des Satzes von zweiten Fahrzeug-UEs verwendet werden sollen, um eine zusätzliche potenzielle SA-Übertragung und eine Datenübertragung von dem Satz von zweiten Fahrzeug-UEs über die Ressourcen zu bestimmen, Bestimmen verfügbarer Ressourcen für die Datenübertragung von dem ersten Fahrzeug-UE auf der Grundlage der durchgeführten Energieerfassung und SA-Erfassung,

Überspringen eines Kanalerfassungsvorgangs auf mindestens einem Teilrahmen, der für die Datenübertragung von dem ersten Fahrzeug-UE verwendet wird, und Übertragen von Daten zwischen Ressourcen, die in den nächsten Übertragungen von zweiten Fahrzeug-UEs als ungenutzt identifiziert werden.

In ZTE: "Co-channel coexistence between DSRC and L TE V2V on same channel", Bd. RAN WG1, Nr. Lisbon, Portugal, 20161010 - 20161014 30, September 2016 (2016-09-30) werden einige Schemata für die Koexistenz von DSRC und LTE-basiertem V2V auf demselben Kanal diskutiert.

SAMSUNG: "Revisiting of lang term co-channel coexistence solution between IEEE802.11 p/DSRC and L TE-V2X", Bd. RAN WG2, Nr. Reno, USA, 20161114 - 20161118, 4. November 2016 (2016-11-04) diskutiert, dass es sich bei einer Untersuchung des DSRC-Mehrkanalbetriebs gezeigt hat, dass es je nach den möglichen DSRC-Änderungen Vor- und Nachteile gibt. Darüber hinaus könnte das Problem des Hidden Node auftreten, wenn ein sensing-basierter Räumungs-/Schaltansatz als Lösung gewählt wird.

Mithin könnte man eine objektive technische Aufgabe dahingehend formulieren, dass ein Koexistenzmechanismus für die zwei unterschiedlichen Drahtloskommunikationstechnologien zu schaffen ist, um auf einem gemeinsamen Frequenzbereich vorhandene Ressourcen fair aufzuteilen.

### Offenbarung der Erfindung

Das der Erfindung zugrunde liegende Problem wird durch ein Verfahren zum Betreiben einer netzwerkinfrastrukturseitigen Netzwerkeinheit nach dem Anspruch 1, durch eine netzwerkinfrastrukturseitige Netzwerkeinheit nach einem nebengeordneten Anspruch, ein Verfahren zum Betreiben einer straßenseitigen Netzwerkeinheit nach einem nebengeordneten Anspruch und eine straßenseitige Netzwerkeinheit nach einem nebengeordneten Anspruch gelöst.

Gemäß einem ersten und zweiten Aspekt wird die netzwerkinfraststrukturseitige Netzwerkeinheit folgendermaßen betrieben: Versenden einer ersten Indikation an eine Anzahl von straßenseitigen Netzwerkeinheiten eines zell-basierten Drahtloskommunikationsnetzwerks, wobei die erste Indikation in einem ersten Zeitrahmen eine Reservierung von Sidelink-Ressourcen eines Sidelink-Kanals in einem nicht lizenzierten Frequenzbereich umfasst; und Versenden einer zweiten Indikation an eine Anzahl von straßenseitigen Netzwerkeinheiten eines Adhoc-Drahtloskommunikationsnetzwerks, wobei die zweite Indikation für einen zweiten Zeitrahmen eine Reservierung eines Adhoc-Kanals in dem nicht lizenzierten Frequenzbereich umfasst, wobei der erste und der zweite Zeitrahmen zeitlich disjunkt sind.

Vorteilhaft werden durch das Vorsehen des ersten und zweiten Zeitrahmens zwei zeitlich disjunkte d. h. voneinander unterschiedliche, sich nicht überschneidende Zeitdauern zur Verfügung gestellt, welche einmal von dem einen und ein anderes Mal von dem anderen Typ von Drahtloskommunikationsnetzwerk genutzt werden. Der nicht lizenzierte Frequenzbereich wird somit durch Netzwerkeinheiten unterschiedlichen Typs verwendet, welche entweder keinen Zugriff auf den Adhoc-Kanal oder keinen Zugriff auf den Sidelink-Kanal haben. Die beiden Indikationen stellen durch eine Art TDM (TDM: Time Division Multiplexing) in dem nicht lizenzierten Frequenzbereich sicher, dass die Kollisionswahrscheinlichkeit reduziert wird. Eine Verfügbarkeit der Daten in beiden Netzwerktypen wird erhöht. Eine Übertragungslatenz in beiden Netzwerktypen reduziert. Entsprechend wird eine faire Aufteilung der vorhandenen Ressourcen im nicht lizenzierten Frequenzbereich erreicht.

Gemäß einem dritten und vierten Aspekt wird die straßenseitige Netzwerkeinheit folgendermaßen betrieben: Ermitteln von Nutzdaten zum Versand an eine weitere straßenseitige Netzwerkeinheit des Adhoc-Drahtloskommunikationsnetzwerks; Empfangen einer Indikation von einer netzwerkinfrastrukturseitigen Netzwerkeinheit, wobei die Indikation für einen Zeitrahmen eine Reservierung eines Adhoc-Kanals in einem nicht lizenzierten Frequenzbereich umfasst; Arbitrierung des Adhoc-Kanals während des Zeitrahmens, und Versenden der Nutzdaten auf dem Adhoc-Kanal während des Zeitrahmens an die weitere straßenseitige Netzwerkeinheit, wenn die Arbitrierung des Adhoc-Kanals erfolgreich war.

Die vorgeschlagene Netzwerkeinheit sieht also von einer Arbitrierung des Adhoc-Kanals außerhalb des vorgegebenen Zeitrahmens ab. Dies bedeutet, dass außerhalb des Zeitrahmens eine Kommunikation stattfinden kann, welche nicht auf den Adhoc-Kanal bezogen ist. Der nicht lizenzierte Frequenzbereich kann somit durch andere Netzwerkeinheiten verwendet werden, welche keinen Zugriff auf den Adhoc-Kanal haben.

Insgesamt ermöglichen die vorgeschlagenen Verfahren und straßenseitgigen Netzwerkeinheiten vorteilhaft eine faire Ressourcenaufteilung zwischen zwei im selben Frequenzbereich operierenden Drahtloskommunikationsnetzwerken.

Weitere Merkmale und Vorteile finden sich in der nachfolgenden Beschreibung von Ausführungsbeispielen. In der Zeichnung zeigen:
- Figur 1: ein erstes zell-basiertes Drahtloskommunikationsnetzwerk und ein zweites Drahtloskommunikationsnetzwerk;
- Figuren 2 und 3: jeweils ein schematisches Ablaufdiagramm; und
- Figuren 4 und 5: jeweils ein schematisches Sequenzdiagramm.

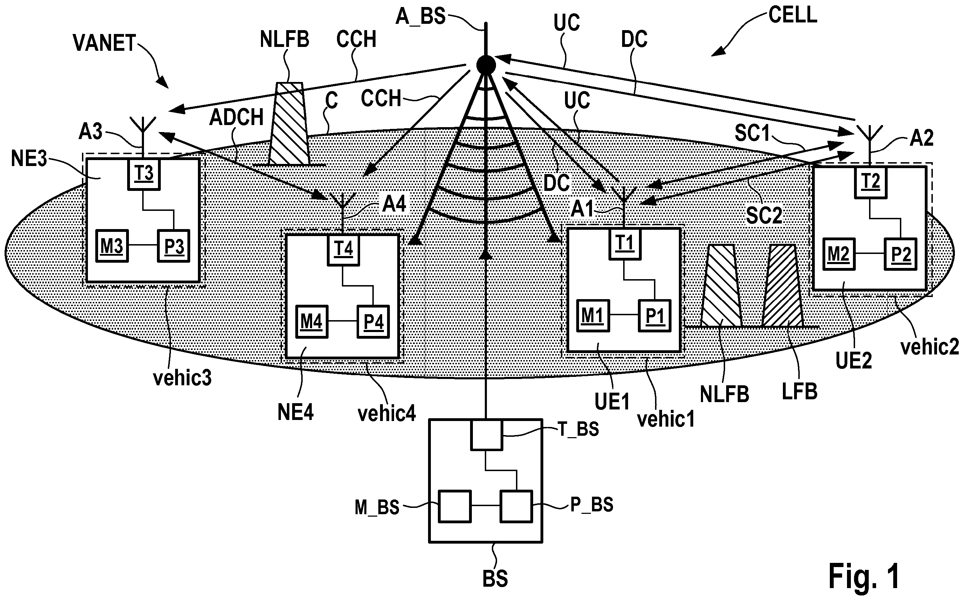

Figur 1 zeigt ein zell-basiertes Drahtloskommunikationsnetzwerk CELL und ein Adhoc-Drahtloskommunikationsnetzwerk VANET. Das zell-basierte Drahtloskommunikationsnetzwerk CELL umfasst eine netzwerkinfrastrukturseitige Netzwerkeinheit BS, eine straßenseitige Netzwerkeinheit UE1 und eine straßenseitige Netzwerkeinheit UE2. Die netzwerkinfrastrukturseitige Netzwerkeinheit BS umfasst einen Prozessor P_BS, ein Speicherelement M_BS, und einen Transceiver T_BS. Die netzwerkinfrastrukturseitige Netzwerkeinheit BS ist auch als Basisstation oder eNodeB bezeichenbar. Die netzwerkinfrastrukturseitige Netzwerkeinheit BS ist mit einer stationären Antenne A_BS verbunden, um Daten auf einem Downlink-Kanal DC zu senden und Daten auf einem Uplink-Kanal UC zu empfangen. Die Antenne A_BS umfasst beispielsweise eine Anzahl von Antennen und ist beispielsweise als Remote Radio Head, RRH, ausgeführt. Die netzwerkinfrastrukturseitige Netzwerkeinheit BS und die Antenne A_BS stellen eine Zelle C bereit, innerhalb derer die straßenseitigen Netzwerkeinheiten UE1 und UE2 mit der Netzwerkeinheit BS kommunizieren können. Selbstverständlich kann die netzwerkinfrastrukturseitige Netzwerkeinheit BS im Rahmen einer Virtualisierung auch verteilt aufgebaut sein und aus vereinzelten Netzwerkeinheiten bestehen. Die Netzwerkeinheiten BS, UE1 und UE2 sind beispielsweise nach dem LTE-V2X-Standard konfiguriert.

Die straßenseitige Netzwerkeinheit UE1 umfasst einen Prozessor P1, ein Speicherelement M1, einen Transceiver T1 und eine Antenne A1. Die straßenseitige Netzwerkeinheit UE2 umfasst einen Prozessor T2, ein Speicherelement M2, einen Transceiver T2 und eine Antenne A2.

Die beiden straßenseitigen Netzwerkeinheiten UE1, UE2 befinden sich innerhalb der Zelle C, und sind fähig, Daten auf dem Downlink-Kanal DC zu empfangen und Daten auf dem Uplink-Kanal UC zu versenden. Die beiden straßenseitigen Netzwerkeinheiten UE1, UE2 sind fähig, direkt miteinander über einen Sidelink-Kanal SC1 in einem nicht-lizenzierten Frequenzbereich NLFB und über einen Sidelink-Kanal SC2 in einem lizenzierten Frequenzbereich LFB zu kommunizieren.

In dieser Beschreibung wird auf den einzigen Uplink-Kanal UC und den einzigen Downlink-Kanal DC Bezug genommen. Beispielsweise umfasst der Uplink-Kanal UC und der Downlink-Kanal DC jeweilige Unterkanäle, d. h. es stehen mehrere Kanäle im Uplink als auch im Downlink zur Verfügung. Gleiches gilt für die Sidelink-Kanäle SC1, SC2.

Das Adhoc-Drahtloskommunikationsnetzwerk VANET umfasst straßenseitige Netzwerkeinheiten NE3 und NE4. Die Netzwerkeinheit NE3 umfasst einen Prozessor P3, ein Speicherelement M3, einen Transceiver T3 und eine Antenne A3. Die Netzwerkeinheit NE4 umfasst einen Prozessor P4, ein Speicherelement M4, einen Transceiver T4 und eine Antenne A4. Die Transceiver T3 und T4 sind beispielsweise nach dem Standard IEEE 802.11p konfiguriert. Die Netzwerkeinheiten NE3 und NE4 kommunizieren direkt miteinander über einen Adhoc-Kanal ADCH in dem nicht lizenzierten Frequenzbereich NLFB. Der Adhoc-Kanal ADCH wird über ein CSMA/CA-Protokoll (CSMA/CA: Carrier Sense Multiple Access/Collision Avoidance) von den Transceivern T3, T4 arbitriert.

Die Netzwerkeinheiten NE3 und NE4 befinden sich in der Nähe der Netzwerkeinheiten UE1 und UE2. Durch diese Nähe kann die jeweilige Sendeleistung ausreichen, sodass Übertragungen auf den Kanälen ADCH und SC1, welche im gleichen nicht lizenzierten Frequenzbereich NLFB übertragen werden, sich gegenseitig nachteilhaft beeinflussen. Ziel dieser Beschreibung ist es, diese gegenseitige nachteilhafte Beeinflussung zu reduzieren.

Die straßenseitigen Netzwerkeinheiten UE1, UE2, NE3 und NE4 sind in jeweiligen Kraftfahrzeugen vehic1, vehic2, vehic3, vehic4 angeordnet und mit einem jeweils dort angeordneten nicht gezeigten Steuergerät zum Datenaustausch verbunden. Alternativ sind die straßenseitigen Netzwerkeinheiten UE1, UE2, NE3 und NE4 Teil des Steuergeräts in dem jeweiligen Kraftfahrzeug vehic1, vehic2, vehic3. In einer weiteren alternativen Ausführungsform sind die straßenseitigen Netzwerkeinheiten UE1, UE2, NE3 und NE4 anstatt in einem Kraftfahrzeug in einer feststehenden Infrastruktur wie beispielsweise einer Ampel angeordnet.

Die Sidelink-Kanäle SC1, SC2 und ein Sidelink im allgemeinen sind beispielsweise durch das Dokument 3GPP TS 36.300 V14.2.0 (2017-03) definiert, welches durch Bezugnahme in diese Beschreibung aufgenommen ist. Der Sidelink umfasst Sidelink Discovery, Sidelink-Kommunikation und V2X-Sidelink-Kommunikation zwischen den Netzwerkeinheiten UE1, UE2. Der Sidelink verwendet Uplink-Ressourcen und eine physikalische Kanalstruktur ähnlich wie die des Uplinks. Der Sidelink unterscheidet sich also vom Uplink in Bezug auf den physikalischen Kanal.

Der Sidelink ist auf einzelne Clusterübertragungen für die physikalischen Sidelink-Kanäle begrenzt. Weiterhin verwendet der Sidelink eine 1-Symbol-Lücke am Ende jedes Sidelink-Subframe. Für die V2X-Sidelink-Kommunikation werden PSCCH, Physical Sidelink Control Channel, und PSSCH, Physical Sidelink Shared Channel, im gleichen Subframe übertragen. Die Sidelink-Kanäle SC1, SC2 sind beispielsweise der PSSCH.

Die physikalische Schichtverarbeitung von Transportkanälen im Sidelink unterscheidet sich von der Uplink-Übertragung in den folgenden Schritten: Scrambling: Für PSDCH, Physical Sidelink Discovery Channel, und PSCCH ist das Scrambling nicht spezifisch für die Netzwerkeinheit; Modulation: 64 QAM und 256 QAM wird für den Sidelink nicht unterstützt (QAM: Quadrature amplitude modulation). Der PSCCH gibt Sidelink-Ressourcen und andere Übertragungsparameter an, die von der jeweiligen Netzwerkeinheit UE1, UE2 für den PSSCH verwendet werden.

Für die PSDCH-, PSCCH- und PSSCH-Demodulation werden Referenzsignale ähnlich den Uplink-Demodulationsreferenzsignalen im 4-ten Symbol des Slots im normalen CP, Cyclic Prefix, und im dritten Symbol des Slots im erweiterten CP übertragen. Die Sidelink-Demodulationsreferenzsignal-Sequenzlänge entspricht der Größe (Anzahl der Subcarrier) der zugeordneten Ressource. Für die V2X-Sidelink-Kommunikation werden Referenzsignale in den 3. und 6. Symbolen des ersten Slots und in den 2. und 5. Symbolen des zweiten Slots im CP übertragen. Für PSDCH und PSCCH werden Referenzsignale basierend auf einer festen Basissequenz, zyklischem Shift und orthogonalem Cover Code erzeugt. Für die V2X-Sidelink-Kommunikation wird der zyklische Shift für PSCCH zufällig bei jeder Übertragung ausgewählt.

Für Messungen des jeweiligen Sidelink-Kanals SC1, SC2 stehen auf der Seite der Netzwerkeinheiten UE1, UE2 folgende Möglichkeiten zur Verfügung: Empfangsleistung des Sidelink-Referenzsignals (S-RSRP); Empfangsleistung des Sidelink-Discovery-Referenzsignals (SD-RSRP); Empfangsleistung des PSSCH-Referenzsignals (PSSCH-RSRP); Signalstärkeindikator für Sidelink-Referenzsignale (S-RSSI).

Der Adhoc-Kanal ADCH und das Adhoc-Drahtloskommunikationsnetzwerk VANET sind beispielsweise durch den IEEE-Standard "802.11p-2010 - IEEE Standard for Information technology-- Local and metropolitan area networks-Specific requirements-- Part 11: Wireless LAN Medium Access Control (MAC) and Physical Layer (PHY) Specifications Amendment 6: Wireless Access in Vehicular Environments" definiert, welcher durch Bezugnahme in diese Beschreibung aufgenommen ist. IEEE 802.11p ist ein Standard zur Erweiterung des WLAN-Standards IEEE 802.11. Die Zielrichtung von IEEE 802.11p ist es, die WLAN-Technik in Personen-Kraftfahrzeugen zu etablieren und eine zuverlässige Schnittstelle für Anwendungen intelligenter Verkehrssysteme (engl. Intelligent Transport Systems, ITS) zu schaffen. IEEE 802.11p ist auch Basis für Dedicated Short Range Communication (DSRC) im Frequenzband von 5,85 bis 5,925 GHz. Um Verwechslungen mit der europäischen DSRC Version zu vermeiden, wird vor allem in Europa eher der Begriff ITS-G5 anstatt DSRC verwendet.

Das Dokument "ETSI EN 302 663 V1.2.0 (2012-11)", welches durch Bezugnahme in diese Beschreibung aufgenommen ist, beschreibt beiden untersten Schichten der ITS-G5-Technologie (ITS G5: Intelligent Transport Systems operating in the 5 GHz frequency band), die physikalische Schicht und die Datenverbindungsschicht. Die Transceiver T3 und T4 realisieren beispielsweise mindestens diese beiden untersten Schichten und korrespondierende Funktionen nach " ETSI EN 302 663 V1.2.0 (2012-11)", um den Adhoc-Kanal ADCH zu verwenden. Für die Verwendung des Adhoc-Kanals ADCH stehen in Europa die folgenden nicht lizenzierten Frequenzbereiche zur Verfügung, welche Teil des nicht-lizenzierten Frequenzbereichs NLFB sind: 1) ITS-G5A für sicherheitsrelevante Anwendungen im Frequenzbereich von 5,875 GHz bis 5,905 GHz; 2) ITS-G5B für nicht-sicherheitsrelevante Anwendungen im Frequenzbereich von 5.855 GHz bis 5.875 GHz; und 3) ITS-G5D für den Betrieb von ITS-Anwendungen im Frequenzbereich 5,905 GHz bis 5.925 GHz. ITS-G5 ermöglicht eine Kommunikation zwischen den zwei Netzwerkeinheiten UE1 und UE2 außerhalb des Kontextes einer Basistation. ITS-G5 ermöglicht den sofortigen Austausch von Datenrahmen und vermeidet einen Management-Overhead, der bei der Einrichtung eines Netzwerks verwendet wird.

Das Dokument "ETSI TS 102 687 V1.1.1 (2011-07)", welches durch Bezugnahme in diese Beschreibung aufgenommen ist, beschreibt für ITS-G5 einen "Decentralized Congestion Control Mechanisms". Der Adhoc-Kanal ADCH dient unter anderem dem Austausch von Daten betreffend die Verkehrssicherheit und die Verkehrseffizienz. Die Transceiver T3 und T4 realisieren beispielsweise die Funktionen, wie sie im Dokument "ETSI TS 102 687 V1.1.1 (2011-07)" beschrieben sind. Die Anwendungen und Dienstleistungen im ITS-G5 beruhen auf dem kooperativen Verhalten der straßenseitigen Netzwerkeinheiten, die das Adhoc-Netzwerk VANET (VANET: vehicular ad hoc network) bilden. Das Adhoc-Netzwerk VANET ermöglicht zeitkritische Straßenverkehrsanwendungen, bei denen ein schneller Informationsaustausch notwendig ist, um den Fahrer und/oder das Fahrzeug rechtzeitig zu warnen und zu unterstützen. Um eine ordnungsgemäße Funktion des Adhoc-Netzwerks VANET zu gewährleisten, wird "Decentralized Congestion Control Mechanisms" (DCC) für den Adhoc-Kanal ADCH von ITS-G5 verwendet. DCC hat Funktionen, die sich auf mehreren Schichten der ITS-Architektur befinden. Die DCC-Mechanismen beruhen auf Wissen über den Kanal. Die Kanalzustandsinformation wird durch Kanal-Sondierung gewonnen. Kanalzustandsinformationen können durch die Methoden TPC (transmit power control), TRC (transmit rate control) und TDC (transmit datarate control) gewonnen werden. Die Methoden ermitteln die Kanalzustandsinformation in Abhängigkeit von Empfangssignalpegelschwellen oder Präambelinformationen von detektierten Paketen.

Der Transceiver T_BS und die Antenne A_BS sind dazu ausgebildet, einen Kontrollkanal CCH zu den Netzwerkeinheiten NE3 und NE4 aufzubauen. Für die Ausbildung des Kontrollkanals CCH gibt es mehrere Möglichkeiten. In einer Ausführungsform ist der Kontrollkanals CCH ein Unterkanal des Downlink-Kanals DC gemäß 3GPP TS 36.300 V14.2.0 (2017-03). Die Transceiver T3 und T4 und die Antennen A3 und A4 sind dabei dazu ausgebildet, sich zu einem Synchronisationssignal ausgehend von der Netzwerkeinheit BS zu synchronisieren und Daten auf dem Kontrollkanal CCH zu lesen. Hierzu reicht auch ein reduzierter Protokollstapel nach 3GPP TS 36.300 V14.2.0 (2017-03) aus.

In einer alternativen Ausführungsform ist der Kontrollkanal CCH analog zu dem Adhoc-Kanal ADCH aufgebaut und verwendet den nicht lizenzierten Frequenzbereich NLFB. Folglich sind der Transceiver T_BS und die Antenne A_BS dazu ausgebildet, auf dem Adhoc-Kanal gemäß dem Kontrollkanal CCH zu den Netzwerkeinheit NE3, NE4 zu senden. Beispielsweise sind der Transceiver T_BS und die Antenne A_BS nach dem Standard IEEE 802.11p-2010 ausgebildet, wobei auch ein reduzierter Protokollstapel genügt, um auf dem Kontrollkanal CCH zu senden.

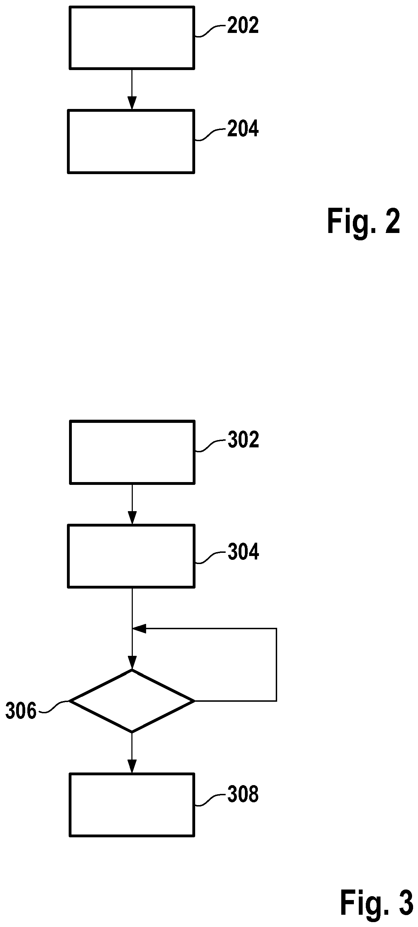

Figur 2 zeigt ein schematisches Ablaufdiagramm zum Betrieb der netzwerkinfrastrukturseitigen Netzwerkeinheit BS aus Figur 1. In einem Schritt 202 wird eine erste Indikation an eine Anzahl von straßenseitigen Netzwerkeinheiten des zellbasierten Drahtloskommunikationsnetzwerks versendet, wobei die erste Indikation innerhalb eines ersten Zeitrahmens eine Reservierung von Sidelink-Ressourcen des Sidelink-Kanals in dem nicht lizenzierten Frequenzbereich umfasst. Diese erste Indikation entspricht zumindest einer Scheduling-Grant-Nachricht, welche eine explizite Zuweisung von Sidelink-Ressourcen zu einer der Netzwerkeinheiten des zell-basierten Drahtloskommunikationsnetzwerks umfasst. In einem Schritt 204 wird eine zweite Indikation an eine Anzahl von straßenseitigen Netzwerkeinheiten des Adhoc-Drahtloskommunikationsnetzwerks versendet. Die zweite Indikation umfasst einen zweiten Zeitrahmen, innerhalb dessen es den straßenseitigen Netzwerkeinheiten des Adhoc-Drahtloskommunikationsnetzwerks erlaubt ist, den Adhoc-Kanal im nicht lizenzierten Frequenzbereich aktiv zu nutzen. Außerhalb dieses zweiten Zeitrahmens ist es den Netzwerkeinheiten des Adhoc-Drahtloskommunikationsnetzwerks verboten, den Adhoc-Kanal zu nutzen. Während dieses Nutzungsverbots des Adhoc-Kanals findet beispielsweise die Nutzung des Sidelink-Kanals statt, welcher sich den nicht lizenzierten Frequenzbereich mit dem Adhoc-Kanal teilt. Die Nutzung des Sidelink-Kanals im nicht lizenzierten Frequenzbereich wird durch die Netzwerkeinheit BS bestimmt, indem die Sidelink-Ressourcen des Sidelink-Kanals von der netzwerkinfrastrukturseitigen Netzwerkeinheit gescheduled werden.

Figur 3 zeigt ein schematisches Ablaufdiagramm zum Betrieb der Netzwerkeinheiten NE3, NE4 des Adhoc-Drahtloskommunikationsnetzwerks VANET aus Figur 1. In einem Schritt 302 werden Nutzdaten zum Versand an eine weitere straßenseitige Netzwerkeinheit des Adhoc-Drahtloskommunikationsnetzwerks ermittelt. In einem Schritt 304 wird die Indikation, welche den zweiten Zeitrahmen indiziert, von der netzwerkinfrastrukturseitigen Netzwerkeinheit empfangen. In einem Schritt 306 wird der Adhoc-Kanal ADCH während des zweiten Zeitrahmens arbitriert. Das bedeutet, dass eine Arbitrierung nur dann stattfindet, wenn die Netzwerkeinheit feststellt, dass der zweite Zeitrahmen aktiv ist bzw. dass man sich im zweiten Zeitrahmen befindet. Die Arbitrierung umfasst eine Kanalprüfung dahingehend, ob die zur Nutzung vorgesehen Radio-Ressourcen auf dem Adhoc-Kanal frei sind. Ist die Arbitrierung im Schritt 306 erfolgreich, so versendet die Netzwerkeinheit in einem Schritt 308 die ermittelten Nutzdaten auf dem Adhoc-Kanal während des zweiten Zeitrahmens an die weitere straßenseitige Netzwerkeinheit.

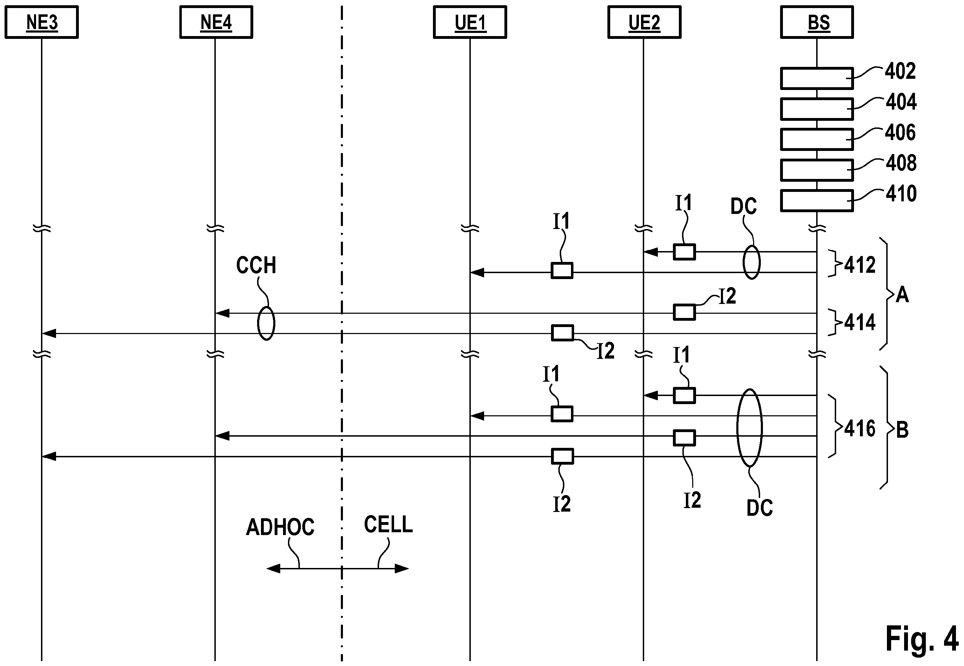

Figur 4 zeigt ein schematisches Sequenzdiagramm. In einem Schritt 402 wird ein Zustand des Sidelink-Kanals SC1 im nicht lizenzierten Frequenzbereich aus Figur 1 ermittelt. Der Zustand des Sidelink-Kanals SC1 umfasst beispielsweise eine Belegungsinformation in Bezug zu dem ersten Zeitrahmen. In einem Schritt 404 wird die Größe des ersten Zeitrahmens in Abhängigkeit von dem Zustand des Sidelink-Kanals ermittelt. Weist der Sidelink-Kanal SC1 beispielsweise einen Auslastungsgrad von 80 % auf, so wird der erste Zeitrahmen vergrößert. Weist der Sidelink-Kanal SC1 beispielsweise einen Auslastungsgrad von 50 % auf, so wird der erste Zeitrahmen verkleinert.

Im Schritt 406 wird der Zustand des Adhoc-Kanals ermittelt. Der Zustand des Adhoc-Kanals umfasst beispielsweise eine Anzahl von erreichbaren und zur Adhoc-Kommunikation fähigen Netzwerkeinheiten. In Abhängigkeit von dem Zustand des Adhoc-Kanals wird in einem Schritt 408 die Größe des zweiten Zeitrahmens ermittelt. Alternativ oder zusätzlich werden im Schritt 408 die Netzwerkeinheiten des Adhoc-Drahtloskommunikationsnetzwerks unterschiedlichen Gruppen zugeordnet, wobei die beiden Gruppen im Wechsel auf den zweiten Zeitrahmen zugreifen. Dieser Wechselzugriff auf den zweiten Zeitrahmen verringert die Kollisionswahrscheinlichkeit auf dem Adhoc-Kanal. In einer Ausführungsform werden mehr als zwei Gruppen gebildet, wobei jede Gruppe exklusiv auf einen von mehreren zeitlich aufeinanderfolgenden zweiten Zeitrahmen zugreift. Die Größe des zweiten Zeitrahmens und/oder die Gruppenzuordnung wird beispielsweise als die zweite Indikation I2 versendet. Umfasst die zweite Indikation I2 die Größe des zweiten Zeitrahmens, so wird die zweite Indikation I2 auch als Aufteilungsindikator eines beispielsweise festen übergeordneten Zeitrahmens angesehen.

In einem Schritt 410 findet ein Scheduling der Sidelink-Ressourcen innerhalb des ersten Zeitrahmens statt und die erste Indikation I1 wird ermittelt. Die erste Indikation I1 umfasst folglich eine Zuteilung von Sidelink-Ressourcen innerhalb des ersten Zeitrahmens. Damit befinden sich alle zugewiesenen Sidelink-Ressourcen innerhalb des ersten Zeitrahmens. Die Netzwerkeinheiten des zellbasierten Drahtloskommunikationsnetzwerks versenden somit ihre Nutzdaten nur innerhalb des ersten Zeitrahmens auf dem Sidelink-Kanal.

Der erste und der zweite Zeitrahmen sind in dem übergeordneten Zeitrahmen angeordnet. Der übergeordnete Zeitrahmen wird in nicht gezeigter Form beispielsweise ausgehend von einer Größe von 100 ms verkürzt, wenn von einer der Netzwerkeinheiten der Drahtloskommunikationsnetzwerke eine Serviceindikation empfangen wird, welche eine verringerte Service-Latenz erfordert.

Alternativ zu den Schritten 402-410 sind der erste Zeitrahmen und der zweite Zeitrahmen persistent oder semi-persistent, wobei semi-persistent bedeutet, dass die Aufteilung des übergeordneten Zeitrahmens in den ersten und zweiten Zeitrahmen gemäß einer Anzahl von Aufteilungsschemata geschieht. Ein Aufteilungsschema umfasst beispielsweise einen Anteil von 20 % des übergeordneten Zeitrahmens für den Sidelink-Kanal und einen Anteil von 80 % des übergeordneten Zeitrahmens für den Adhoc-Kanal. Das Aufteilungsschema umfasst auch eine Reihenfolge der ersten und zweiten Zeitrahmen innerhalb des übergeordneten Zeitrahmens.

Gemäß einer ersten Ausführungsform A wird die erste Indikation I1 in einem Schritt 412 auf den Downlink-Kanal DC an die Netzwerkeinheiten UE1 und UE2 versendet. Die zweite Indikation I2 wird gemäß einem Schritt 414 auf dem Kontrollkanal CCH an die Netzwerkeinheiten NE3 und NE4 versendet. Bei der Ausführungsform A ist der Transceiver T_BS der Netzwerkeinheit BS aus Figur 1 dazu ausgebildet, um den Kontrollkanal CCH in dem Adhoc-Drahtloskommunikationsnetzwerk VANET aufzubauen.

Gemäß einer zweiten Ausführungsform B werden die erste und die zweite Indikation I1, I2 in einem Schritt 416 auf dem Downlink-Kanal DC an die Netzwerkeinheiten UE1 bis NE4 versendet. Die Transceiver T3 und T4 aus Figur 1 müssen hierzu nicht die gesamte Funktionalität wie die Transceiver T1 und T2 umfassen, sondern können einen demgegenüber reduzierten Funktionsumfang umfassen. Bei der Ausführungsform B sind die Transceiver T3 und T4 aus Figur 1 also zumindest dazu ausgebildet, ein Synchronisationssignal von der Netzwerkeinheit BS zu empfangen, sich darauf zu synchronisieren und auf den Downlink-Kanal DC, auf dem die Indikationen I1, I2 gesendet werden, lesend zuzugreifen.

Die erste Indikation I1 stellt den Netzwerkeinheiten UE1, UE2 Scheduling-Informationen, d. h. Zuweisungen von Sidelink-Ressourcen des Sidelink-Kanals SC1 bereit. Die erste Indikation I1 wird von der Netzwerkeinheit BS an die Situation im zell-basierten Drahtloskommunikationsnetzwerk CELL angepasst und an die Netzwerkeinheiten UE1, UE2 versendet, die sich nur auf den zugewiesenden Sidelink-Ressourcen senden/empfangen.

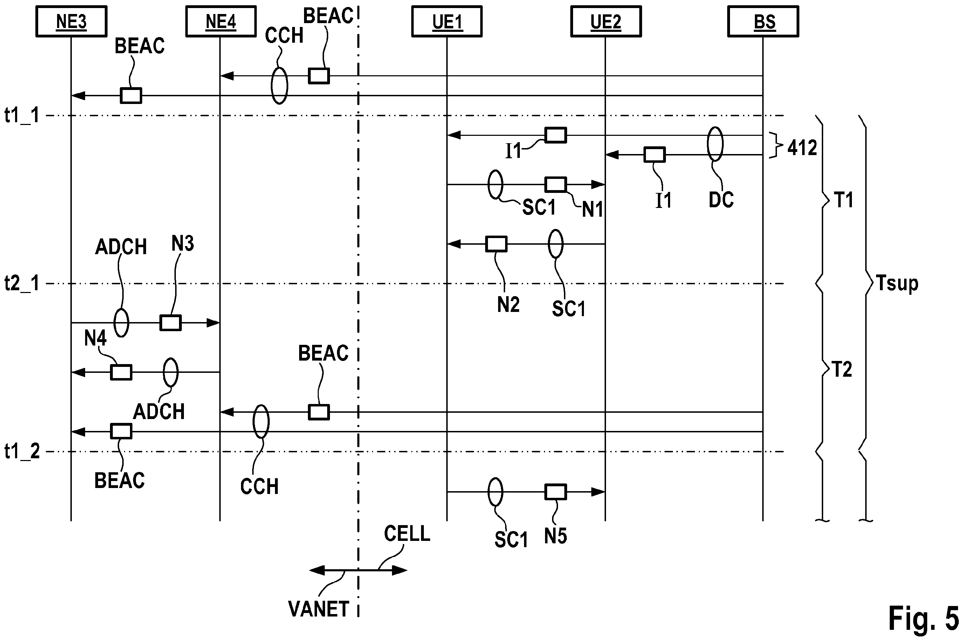

Die zweite Indikation I2 stellt den Netzwerkeinheiten NE3, NE4 den zweiten Zeitrahmen T2, d. h. eine Freigabe von Adhoc-Ressourcen des Adhoc-Kanals bereit. Die Netzwerkeinheiten NE3, NE4 arbitrieren den Adhoc-Kanal gemäß dem CSMA/CA-Verfahren. Die zweite Indikation I2 wird von der Netzwerkeinheit BS an die Situation im Adhoc-Drahtloskommunikationsnetzwerk CELL angepasst. Alternativ ist die zweite Indikation I2 im Sinne einer Größe des Zeitrahmens persistent oder semi-persistent. Im Falle einer persistenten oder semi-persistenten Ausführung wird den Netzwerkeinheiten NE3, NE4 der zweite Zeitrahmen mittels einer in Figur 5 erläuterten Indikation mitgeteilt.

Figur 5 zeigt ein schematisches Sequenzdiagramm. Der übergeordnete Zeitrahmen Tsup umfasst den ersten Zeitrahmen T1 und den zweiten Zeitrahmen T2. Der übergeordnete Zeitrahmen Tsup beginnt zu Zeitpunkten t1_1, t1_2. Der erste Zeitrahmen T1 endet zum Zeitpunkt t2_1. Der zweite Zeitrahmen T2 beginnt zum Zeitpunkt t2_1 und ended zum Zeitpunkt t1_2. Die Indikation I1 umfasst eine Zuordnung von Sidelink-Ressourcen zum Versand von Nutzdaten N1, N2 auf dem Sidelink-Kanal SC1. Die Indikation I1 bedeutet damit, dass im ersten Zeitrahmen T1 der Sidelink-Kanal SC1 aktiv genutzt wird und die Netzwerkeinheiten NE3 und NE3 des Adhoc-Drahtloskommunikationsnetzwerks VANET von einem Zugriff auf den Adhoc-Kanal absehen.

Im zweiten Zeitrahmen T2 werden Nutzdaten N3 und N4 auf dem Adhoc-Kanal ADCH versendet. Die Netzwerkeinheit BS verhindert die Zuteilung von Sidelink-Ressourcen in dem zweiten Zeitrahmen T2. Folglich wird vor einer Arbitrierung des Adhoc-Kanals ADCH durch die Netzwerkeinheiten NE3, NE4 überprüft, ob der zweite Zeitrahmen T2 aktiv ist. Ist dies der Fall, findet bei Vorliegen von zu versenden Nutzdaten N3, N4 eine Arbitrierung des Adhoc-Kanals ADCH statt. Ist die Arbitrierung erfolgreich, so werden die Nutzdaten in N3, N4 versendet. Innerhalb des zweiten Zeitrahmens T2 versendet die Netzwerkeinheit BS auf dem Kontrollkanal CCH eine Indikation BEAC, welches den Zeitpunkt t1_1, t1_2 und damit den Beginn eines nächsten übergeordneten Zeitrahmens Tsup signalisiert. Die Indikation BEAC wird auch als zweite Indikation und/oder Beacon bezeichnet. Die Indikation BEAC wird von der Netzwerkeinheit BS beispielsweise in regelmäßigen Zeitabständen an die Anzahl von Netzwerkeinheiten NE3, NE4 im Sinne eines Broadcasts versendet. Die Indikation BEAC indiziert zusätzlich oder alternativ den Zeitpunkt t2_1, also den Beginn des zweiten Zeitrahmens T2.

Im gezeigten Beispiel wird die Indikation BEAC auf dem Kanal CCH und damit im zweiten Zeitfenster T2 versendet. Alternativ wird die Indikation BEAC auf dem Downlink-Kanal DC versendet, wobei die Indikation BEAC unabhängig von dem ersten oder zweiten Zeitfenster versendet werden kann.

Innerhalb des übergeordneten Zeitrahmens Tsup folgt der zweite Zeitrahmen T2 auf den ersten Zeitrahmen T1. Dies hat den Vorteil, dass die Netzwerkeinheit BS die schedulbaren Sidelink-Ressourcen im ersten Zeitrahmen T1 unterbringt und der zweite Zeitrahmen T2 den Netzwerkeinheiten NE3, NE4 zur Verfügung steht. In einer alternativen Ausführungsform ist der zweite Zeitrahmen T2 als erster in dem übergeordneten Zeitrahmen Tsup angeordnet und der erste Zeitrahmen T1 folgt auf den zweiten Zeitrahmen T2. In einer weiteren Ausführungsform sind die Zeitrahmen T1 und T2 durch eine Sicherheits-Zeitdauer voneinander beanstandet, um eine gegenseitige Beeinflussung der beiden Drahtloskommunikationsnetzwerke VANET, CELL zu reduzieren.

In einer Ausführungsform reduzieren die Netzwerkeinheiten UE1, UE2 ihren Energiebedarf dadurch, dass sie während der zweiten Zeitdauer T2 den jeweiligen Transceiver mit einer reduzierten Energieaufnahme betreiben, da weder ein Senden noch ein Empfangen während der zweiten Zeitdauer T2 geplant ist.

In einer Ausführungsform reduzieren die Netzwerkeinheiten NE3, NE4 ihren Energiebedarf dadurch, dass sie während der ersten Zeitdauer T1 den jeweiligen Transceiver mit einer reduzierten Energieaufnahme betreiben, da weder ein Senden noch ein Empfangen während der ersten Zeitdauer T1 geplant ist.

## Patentansprüche

1. Ein Verfahren zum Betreiben einer netzwerkinfrastrukturseitigen Netzwerkeinheit (BS), das Verfahren umfassend:
- Versenden (202) einer ersten Indikation (11) an eine Anzahl von straßenseitigen Netzwerkeinheiten (UE1, UE2) eines zell-basierten Drahtloskommunikationsnetzwerks (CELL), wobei die erste Indikation (11) in einem ersten Zeitrahmen (T1) eine Reservierung von Sidelink-Ressourcen eines Sidelink-Kanals (SC1) in einem nicht lizenzierten Frequenzbereich (NLFB) umfasst; und
- Versenden (204) einer zweiten Indikation (I2; BEAC) an eine Anzahl von straßenseitigen Netzwerkeinheiten (NE3, NE4) eines Adhoc-Drahtloskommunikationsnetzwerks, wobei die zweite Indikation (I2; BEAC) für einen zweiten Zeitrahmen (T2) eine Reservierung eines Adhoc-Kanals (ADCH) in dem nicht lizenzierten Frequenzbereich (NLFB) umfasst, wobei der erste und der zweite Zeitrahmen (T1, T2) zeitlich disjunkt sind.

2. Das Verfahren nach dem Anspruch 1, wobei der zweite Zeitrahmen (T2) innerhalb eines übergeordneten Zeitrahmens (Tsup) angeordnet ist, und wobei der zweite Zeitrahmen (T2) in einem zeitlich nachfolgenden Abschnitt des übergeordneten Zeitrahmens (Tsup) angeordnet ist.

3. Das Verfahren nach dem Anspruch 1 oder 2, wobei die erste Indikation (11) und die zweite Indikation (I2; BEAC) auf einem Downlink-Kanal (DC) gesendet werden.

4. Das Verfahren nach dem Anspruch 1 oder 2, wobei die erste Indikation (11) auf einem Downlink-Kanal (DC) gesendet wird, und wobei die zweite Indikation (I2; BEAC) auf einem Kontrollkanal (CCH) des Adhoc-Kanal (ADCH) gesendet wird.

5. Ein Verfahren nach einem der vorstehenden Ansprüche, umfassend:
- Ermitteln (402) eines Zustands des Sidelink-Kanals (SC1);
- Ermitteln (404) der Größe des ersten Zeitrahmens (T1) in Abhängigkeit von dem Zustand des Sidelink-Kanals (SC1).

6. Ein Verfahren nach einem der vorstehenden Ansprüche, umfassend:
- Ermitteln (406) eines Zustands des Adhoc-Kanals (ADCH); und
- Ermitteln (408) der Größe des zweiten Zeitrahmens (T2) in Abhängigkeit von dem Zustand des Adhoc-Kanals (ADCH).

7. Das Verfahren nach einem der vorstehenden Ansprüche, wobei der zweite Zeitrahmen (T2) in Abhängigkeit von einer Anzahl von erreichbaren und zur Adhoc-Kommunikation fähigen Netzwerkeinheiten (NE3, NE4) ermittelt wird.

8. Eine netzwerkinfrastrukturseitige Netzwerkeinheit (BS), die dazu ausgebildet ist:
- eine erste Indikation (I1) an eine Anzahl von straßenseitigen Netzwerkeinheiten (UE1, UE2) eines zell-basierten Drahtloskommunikationsnetzwerks (CELL) zu versenden, wobei die erste Indikation (I1) in einem ersten Zeitrahmen (T1) eine Reservierung von Sidelink-Ressourcen eines Sidelink-Kanals (SC1) in einem nicht lizenzierten Frequenzbereich (NLFB) umfasst; und
- eine zweite Indikation (I2; BEAC) an eine Anzahl von straßenseitigen Netzwerkeinheiten (NE3, NE4) eines Adhoc-Drahtloskommunikationsnetzwerks zu versenden, wobei die zweite Indikation (I2; BEAC) für einen zweiten Zeitrahmen (T2) eine Reservierung eines Adhoc-Kanals (ADCH) in dem nicht lizenzierten Frequenzbereich (NLFB) umfasst, wobei der erste und der zweite Zeitrahmen (T1, T2) zeitlich disjunkt sind.

9. Ein Verfahren zum Betreiben einer straßenseitigen Netzwerkeinheit (NE3; NE4) eines Adhoc-Drahtloskommunikationsnetzwerks, das Verfahren umfassend:
- Ermitteln (302) von Nutzdaten (N3; N4) zum Versand an eine weitere straßenseitige Netzwerkeinheit (NE4; NE3) des Adhoc-Drahtloskommunikationsnetzwerks;
- Empfangen (304) einer Indikation (I2; BEAC) von einer netzwerkinfrastrukturseitigen Netzwerkeinheit (BS), wobei die Indikation (I2; BEAC) für einen Zeitrahmen (T2) eine Reservierung eines Adhoc-Kanals (ADCH) in einem nicht lizenzierten Frequenzbereich (NLFB) umfasst;
- Arbitrierung (306) des Adhoc-Kanals (ADCH) während des Zeitrahmens (T2), und
- Versenden (308) der Nutzdaten (N3; N4) auf dem Adhoc-Kanal (ADCH) während des Zeitrahmens (T2) an die weitere straßenseitige Netzwerkeinheit (NE4; NE3), wenn die Arbitrierung des Adhoc-Kanals (ADCH) erfolgreich war.

10. Das Verfahren nach dem Anspruch 9, wobei der zweite Zeitrahmen (T2) innerhalb eines übergeordneten Zeitrahmens (Tsup) angeordnet sind, und wobei der zweite Zeitrahmen (T2) auf den ersten Zeitrahmen (T1) folgt.

11. Das Verfahren nach dem Anspruch 9 oder 10, wobei die Indikation (I2; BEAC) auf einem Downlink-Kanal (DC) eines zell-basierten Drahtloskommunikationsnetzwerks (CELL) von der netzwerkinfrastrukturseitigen Netzwerkeinheit (BS) empfangen wird.

12. Das Verfahren nach dem Anspruch 9 oder 10, wobei die Indikation (I2; BEAC) auf einem Kontrollkanal (CCH) des Adhoc-Drahtloskommunikationsnetzwerks von der netzwerkinfrastrukturseitigen Netzwerkeinheit (BS) empfangen wird.

13. Das Verfahren nach einem der Ansprüche 9 bis 12, wobei der Adhoc-Kanal (ADCH) außerhalb des Zeitrahmens (T2) von der Netzwerkeinheit (NE3; NE4) nicht arbitriert wird.

14. Eine straßenseitige Netzwerkeinheit (NE3; NE4) eines Adhoc-Drahtloskommunikationsnetzwerks
- wobei ein Prozessor (P3; P4) dazu ausgebildet ist, Nutzdaten (N3; N4) zum Versand an eine weitere straßenseitige Netzwerkeinheit (NE4; NE3) des Adhoc-Drahtloskommunikationsnetzwerks zu ermitteln;
- wobei eine Antenne (A3; A4) und ein Transceiver (T3; T4) dazu ausgebildet sind, eine Indikation (I2; BEAC) von einer netzwerkinfrastrukturseitigen Netzwerkeinheit (BS) zu empfangen, wobei die Indikation (I2; BEAC) für einen Zeitrahmen (T2) eine Reservierung eines Adhoc-Kanals (ADCH) in einem nicht lizenzierten Frequenzbereich (NLFB) umfasst; den Adhoc-Kanal (ADCH) während des Zeitrahmens (T2) zu arbitrieren; und die Nutzdaten (N3; N4) auf dem Adhoc-Kanal (ADCH) während des Zeitrahmens (T2) an die weitere straßenseitige Netzwerkeinheit (NE4; NE3) zu versenden, wenn die Arbitrierung des Adhoc-Kanals (ADCH) erfolgreich war.

15. Ein Kraftfahrzeug (vehic3; vehic4) umfassend die straßenseitige Netzwerkeinheit (NE3; NE4) nach dem vorstehenden Anspruch.

16. Ein Verfahren zum Betreiben eines zell-basierten Drahtloskommunikationsnetzwerks (CELL) und eines Adhoc-Drahtloskommunikationsnetzwerks umfassend das Verfahren nach einem der Ansprüche 1 bis 7 das Verfahren nach einem der Ansprüche 9 bis 13.

## Claims

1. Method for operating a network-infrastructure-side network unit (BS), the method comprising:
- sending (202) a first indication (11) to a number of roadside network units (UE1, UE2) of a cell-based wireless communication network (CELL), the first indication (11) comprising a reservation of sidelink resources of a sidelink channel (SC1) in an unlicensed frequency band (NLFB) in a first time frame (T1); and
- sending (204) a second indication (12; BEAC) to a number of roadside network units (NE3, NE4) of an ad hoc wireless communication network, the second indication (I2;BEAC) comprising a reservation of an ad hoc channel (ADCH) in the unlicensed frequency band (NLFB) for a second time frame (T2), the first and second time frames (T1, T2) being separated in time.

2. Method according to Claim 1, wherein the second time frame (T2) is arranged within a superordinate time frame (Tsup), and wherein the second time frame (T2) is arranged in a temporally subsequent section of the superordinate time frame (Tsup).

3. Method according to Claim 1 or 2, wherein the first indication (11) and the second indication (12; BEAC) are transmitted on a downlink channel (DC).

4. Method according to Claim 1 or 2, wherein the first indication (11) is transmitted on a downlink channel (DC), and wherein the second indication (12; BEAC) is transmitted on a control channel (CCH) of the ad hoc channel (ADCH).

5. Method according to one of the preceding claims, comprising:
- ascertaining (402) a state of the sidelink channel (SC1);
- ascertaining (404) the size of the first time frame (T1) on the basis of the state of the sidelink channel (SC1).

6. Method according to one of the preceding claims, comprising:
- ascertaining (406) a state of the ad hoc channel (ADCH); and
- ascertaining (408) the size of the second time frame (T2) on the basis of the state of the ad hoc channel (ADCH).

7. Method according to one of the preceding claims, wherein the second time frame (T2) is ascertained on the basis of a number of reachable network units (NE3, NE4) capable of ad hoc communication.

8. Network-infrastructure-side network unit (BS) designed:
- to send a first indication (11) to a number of roadside network units (UE1, UE2) of a cell-based wireless communication network (CELL), the first indication (11) comprising a reservation of sidelink resources of a sidelink channel (SC1) in an unlicensed frequency band (NLFB) in a first time frame (T1); and
- to send a second indication (12; BEAC) to a number of roadside network units (NE3, NE4) of an ad hoc wireless communication network, the second indication (12; BEAC) comprising a reservation of an ad hoc channel (ADCH) in the unlicensed frequency band (NLFB) for a second time frame (T2), the first and second time frames (T1, T2) being separated in time.

9. Method for operating a roadside network unit (NE3; NE4) of an ad hoc wireless communication network, the method comprising:
- ascertaining (302) payload data (N3; N4) to be sent to another roadside network unit (NE4; NE3) of the ad hoc wireless communication network;
- receiving (304) an indication (12; BEAC) from a network-infrastructure-side network unit (BS), the indication (12; BEAC) comprising a reservation of an ad hoc channel (ADCH) in an unlicensed frequency band (NLFB) for a time frame (T2);
- arbitrating (306) the ad hoc channel (ADCH) during the time frame (T2), and
- sending (308) the payload data (N3; N4) to the other roadside network unit (NE4; NE3) on the ad hoc channel (ADCH) during the time frame (T2) if the arbitration of the ad hoc channel (ADCH) was successful.

10. Method according to Claim 9, wherein the second time frame (T2) is arranged within a superordinate time frame (Tsup), and wherein the second time frame (T2) follows the first time frame (T1).

11. Method according to Claim 9 or 10, wherein the indication (I2;BEAC) is received from the network-infrastructure-side network unit (BS) on a downlink channel (DC) of a cell-based wireless communication network (CELL).

12. Method according to Claim 9 or 10, wherein the indication (12; BEAC) is received from the network-infrastructure-side network unit (BS) on a control channel (CCH) of the ad hoc wireless communication network.

13. Method according to one of Claims 9 to 12, wherein the ad hoc channel (ADCH) is not arbitrated by the network unit (NE3; NE4) outside the time frame (T2).

14. Roadside network unit (NE3; NE4) of an ad hoc wireless communication network,
- wherein a processor (P3; P4) is designed to ascertain payload data (N3; N4) to be sent to another roadside network unit (NE4; NE3) of the ad hoc wireless communication network;
- wherein an antenna (A3; A4) and a transceiver (T3; T4) are designed to receive an indication (12; BEAC) from a network-infrastructure-side network unit (BS), the indication (12; BEAC) comprising a reservation of an ad hoc channel (ADCH) in an unlicensed frequency band (NLFB) for a time frame (T2); to arbitrate the ad hoc channel (ADCH) during the time frame (T2); and to send the payload data (N3; N4) to the other roadside network unit (NE4; NE3) on the ad hoc channel (ADCH) during the time frame (T2) if the arbitration of the ad hoc channel (ADCH) was successful.

15. Motor vehicle (vehic3; vehic4) comprising the roadside network unit (NE3; NE4) according to the preceding claim.

16. Method for operating a cell-based wireless communication network (CELL) and an ad hoc wireless communication network comprising the method according to one of Claims 1 to 7 the method according to one of Claims 9 to 13.

## Revendications

1. Procédé pour faire fonctionner une unité de réseau côté infrastructure de réseau (BS), le procédé comprenant :
- l'envoi (202) d'une première indication (I1) à un certain nombre d'unités de réseau côté route (UE1, UE2) d'un réseau de communication sans fil à base de cellules (CELL), la première indication (I1) comprenant, dans une première trame de temps (T1), une réservation de ressources de liaison latérale d'un canal de liaison latérale (SC1) dans une plage de fréquences non sous licence (NLFB) ; et
- l'envoi (204) d'une deuxième indication (12 ; BEAC) à un certain nombre d'unités de réseau côté route (NE3, NE4) d'un réseau de communication sans fil ad hoc, la deuxième indication (12 ; BEAC) comprenant, pour une deuxième trame de temps (T2), une réservation d'un canal ad hoc (ADCH) dans la plage de fréquences non sous licence (NLFB), les première et deuxième trames de temps (T1, T2) étant disjointes dans le temps.

2. Procédé selon la revendication 1, la deuxième trame de temps (T2) étant disposée à l'intérieur d'une trame de temps de niveau supérieur (Tsup), et la deuxième trame de temps (T2) étant disposée dans une portion qui suit temporellement la trame de temps de niveau supérieur (Tsup).

3. Procédé selon la revendication 1 ou 2, la première indication (I1) et la deuxième indication (12 ; BEAC) étant envoyées sur un canal de liaison descendante (DC).

4. Procédé selon la revendication 1 ou 2, la première indication (I1) étant envoyée sur un canal de liaison descendante (DC), et la deuxième indication (12 ; BEAC) étant envoyée sur un canal de contrôle (CCH) du canal ad hoc (ADCH).

5. Procédé selon l'une des revendications précédentes, comprenant :
- la détermination (402) d'un état du canal de liaison latérale (SC1) ;
- la détermination (404) de la taille de la première trame de temps (T1) en fonction de l'état du canal de liaison latérale (SC1).

6. Procédé selon l'une des revendications précédentes, comprenant :
- la détermination (406) d'un état du canal ad hoc (ADCH) ; et
- la détermination (408) de la taille de la deuxième trame de temps (T2) en fonction de l'état du canal ad hoc (ADCH).

7. Procédé selon l'une des revendications précédentes, la deuxième trame de temps (T2) étant déterminée en fonction d'un nombre d'unités de réseau (NE3, NE4) accessibles et aptes à une communication ad hoc.

8. Unité de réseau côté infrastructure de réseau (BS), qui est configurée pour :
- envoyer une première indication (I1) à un certain nombre d'unités de réseau côté route (UE1, UE2) d'un réseau de communication sans fil à base de cellules (CELL), la première indication (I1) comprenant, dans une première trame de temps (T1), une réservation de ressources de liaison latérale d'un canal de liaison latérale (SC1) dans une plage de fréquences non sous licence (NLFB) ; et
- envoyer une deuxième indication (12 ; BEAC) à un certain nombre d'unités de réseau côté route (NE3, NE4) d'un réseau de communication sans fil ad hoc, la deuxième indication (12 ; BEAC) comprenant, pour une deuxième trame de temps (T2), une réservation d'un canal ad hoc (ADCH) dans la plage de fréquences non sous licence (NLFB), les première et deuxième trames de temps (T1, T2) étant disjointes dans le temps.

9. Procédé pour faire fonctionner une unité de réseau côté route (NE3 ; NE4) d'un réseau de communication sans fil ad hoc, le procédé comprenant :
- la détermination (302) de données utiles (N3 ; N4) à envoyer à une unité de réseau côté route (NE4 ; NE3) supplémentaire du réseau de communication sans fil ad hoc ;
- la réception (304) d'une indication (12 ; BEAC) de la part d'une unité de réseau côté infrastructure de réseau (BS), l'indication (12 ; BEAC) comprenant, pour une trame de temps (T2), une réservation d'un canal ad hoc (ADCH) dans une plage de fréquences non sous licence (NLFB) ;
- l'arbitrage (306) du canal ad hoc (ADCH) pendant la trame de temps (T2), et
- l'envoi (308) des données utiles (N3 ; N4) sur le canal ad hoc (ADCH) pendant la trame de temps (T2) à l'entité de réseau côté route (NE4 ; NE3) supplémentaire lorsque l'arbitrage du canal ad hoc (ADCH) a réussi.

10. Procédé selon la revendication 9, la deuxième trame de temps (T2) étant disposée à l'intérieur d'une trame de temps de niveau supérieur (Tsup), et la deuxième trame de temps (T2) suivant la première trame de temps (T1).

11. Procédé selon la revendication 9 ou 10, l'indication (12 ; BEAC) étant reçue de la part de l'unité de réseau côté infrastructure de réseau (BS) sur un canal de liaison descendante (DC) d'un réseau de communication sans fil à base de cellules (CELL).

12. Procédé selon la revendication 9 ou 10, l'indication (12 ; BEAC) étant reçue de la part de l'unité de réseau côté infrastructure de réseau (BS) sur un canal de contrôle (CCH) du réseau de communication sans fil ad hoc.

13. Procédé selon l'une des revendications 9 à 12, le canal ad hoc (ADCH) n'étant pas arbitré par l'unité de réseau (NE3 ; NE4) en dehors de la trame de temps (T2).

14. Unité de réseau côté route (NE3 ; NE4) d'un réseau de communication sans fil ad hoc,
- un processeur (P3 ; P4) étant configuré pour déterminer des données utiles (N3 ; N4) à envoyer à une unité de réseau côté route (NE4 ; NE3) supplémentaire du réseau de communication sans fil ad hoc ;
- une antenne (A3 ; A4) et un émetteur-récepteur (T3 ; T4) étant configurés pour recevoir une indication (12 ; BEAC) de la part d'une unité de réseau côté infrastructure de réseau (BS), l'indication (12 ; BEAC) comprenant, pour une trame de temps (T2), une réservation d'un canal ad hoc (ADCH) dans une plage de fréquences non sous licence (NLFB) ; arbitrer le canal ad hoc (ADCH) pendant la trame de temps (T2) ; et envoyer les données utiles (N3 ; N4) sur le canal ad hoc (ADCH) pendant la trame de temps (T2) à l'unité de réseau côté route (NE4 ; NE3) supplémentaire si l'arbitrage du canal ad hoc (ADCH) a réussi.

15. Véhicule automobile (vehic3 ; vehic4) comprenant l'unité de réseau côté route (NE3 ; NE4) selon la revendication précédente.

16. Procédé pour faire fonctionner un réseau de communication sans fil à base de cellules (CELL) et d'un réseau de communication sans fil ad hoc, comprenant le procédé selon l'une des revendications 1 à 7 le procédé selon l'une des revendications 9 à 13.
